# EUROPÄISCHE PATENTSCHRIFT

(11) **EP 1 616 696 B1**
(45) Veröffentlichungstag und Bekanntmachung des Hinweises auf die Patenterteilung: **21.03.2007**
(21) Anmeldenummer: 04405406.2
(22) Anmeldetag: 01.07.2004
(51) Int. Cl.: B32B 7/12, B32B 15/08, B32B 37/00, B65D 30/16, B65D 30/14

(54) **Verfahren zur Herstellung eines Verpackungsmaterials**
Process of making a packaging material
Procédé de préparation d'un matériau d'emballage

(43) Veröffentlichungstag der Anmeldung: 18.01.2006
(73) Patentinhaber: Alcan Technology & Management Ltd., 8212 Neuhausen am Rheinfall (CH)
(72) Erfinder: Nägeli, Hans-Rudolf, 8212 Neuhausen (CH); Hombach, Franz Peter, 8222 Beringen (CH); Molter, Bert, Crestwook, KY 40065 (US); Santa, Steven, Lanke Bluff, IL 60044 (US)

(56) Entgegenhaltungen:
- EP-A- 1 411 077
- WO-A-99/67340
- DE-C- 19 523 530
- US-A- 4 436 570
- US-A- 4 997 504

## Beschreibung

Die Erfindung betrifft ein Verfahren zur Herstellung eines Verpackungsmaterials nach dem Oberbegriff von Anspruch 1 sowie einen aus diesem hergestellten Standbeutel.

Laminate zur Herstellung von Standbeuteln für Getränke werden heute mit lösungsmittelfreien Klebstoffen in zwei Fertigungsschritten und mit lösungsmittelbasierten Klebstoffen in einem Fertigungsschritt hergestellt.

Das lösungsmittelfreie Herstellungsverfahren ist zwar umweltfreundlich, erfordert jedoch zwei Fertigungsschritte. In einem ersten Schritt wird eine Aluminiumfolie mit einem bedruckten und mit einem lösungsmittelfreien Polyurethan (PUR)-Kleber beschichteten Polyethylenterephthalat (PET)-Film verklebt. Nach einer Aushärtungsdauer von mehreren Stunden kann dieses Vorlaminat über einen lösungsmittelbasierten oder lösungsmittelfreien PUR-Klebstoff gegen einen Polyolefin-Film laminiert werden. Die endgültige Struktur ist: PET-Film / Klebstoffschicht / Aluminiumfolie / Klebstoffschicht / Polyolefin-Film. Nach dem abschliessenden Aushärten während mehreren Tagen kann das fertig gestellte Laminat zugeschnitten und an den Kunden verschickt werden. Die vom Auftragseingang bis zur Auslieferung des fertig konfektionierten Laminates benötigte Durchlaufzeit ist wesentlich von der Aushärtungsdauer der PUR-Klebstoffe abhängig.

Ein Verfahren der eingangs genannten Art ist aus US-A-4 436 570, EP-A-1 411 077, WO 99/67340 A und DE 195 23 530 C bekannt.

Der Erfindung liegt die Aufgabe zugrunde, ein Verfahren der eingangs genannten Art bereitzustellen, mit welchem die Aushärtungsdauer der für die Laminierung benötigten Klebstoffe und damit die Durchlaufzeit im Vergleich zur Klebstoffaushärtungsdauer bei der herkömmlichen Laminatherstellung herabgesetzt werden kann.

Zur erfindungsgemässen Lösung der Aufgabe führt ein Verfahren mit den Merkmalen von Anspruch 1.

Vorteilhafte Weiterbildungen des Verfahrens sind gegenstand von abhängigen Ansprüchen.

Die Strahlenhärtung von Elektronenstrahl härtenden Klebstoffen erfolgt beim Durchlauf durch eine Bestrahlungsstation innerhalb von Sekundenbruchteilen, wobei die endgültige Haftfestigkeit ohne zusätzliche Aushärtungsdauer im wesentlichen erreicht ist, wenn das Laminat aus der Bestrahlungsstation austritt und aufgewickelt wird.

Der Vorteil einer Laminatherstellung unter Verwendung Elektronenstrahl härtender Klebstoffe liegt nicht nur in einer wesentlich verminderten Durchlaufzeit, sondern auch in einer Reduktion von Lösungsmittelemissionen, wenn lösungsmittelbasierte Klebstoffe durch Elektronenstrahl härtende Klebstoffe ersetzt werden können.

Das Laminat weist drei Filme oder Folien und zwei Klebstoffschichten auf, wobei eine der Klebstoffschichten oder beide Klebstoffschichten aus einem Elektronenstrahl härtenden Klebstoff besteht/bestehen.

Falls nur eine der beiden Klebstoffschichten aus einem Elektronenstrahl härtenden Klebstoff besteht, wird für die zweite Klebstoffsschicht bevorzugt ein lösungsmittelbasierter oder lösungsmittelfreier PUR-Klebstoff verwendet.

Ein bevorzugtes Laminat weist die folgende Struktur auf: PET-Film / erste Klebstoffschicht aus einem Elektronenstrahl härtenden Klebstoff / Aluminiumfolie / zweite Klebstoffschicht aus einem Elektronenstrahl härtenden Klebstoff / Polyolefin-Film.

Falls nur eine der beiden Klebstoffschichten aus einem Elektronenstrahl härtenden Klebstoff besteht, weist ein weiter bevorzugtes Laminat die folgende Struktur auf: PET-Film / erste Klebstoffschicht aus einem Elektronenstrahl härtenden Klebstoff / Aluminiumfolie / zweite Klebstoffschicht aus einem lösungsmittelbasierten oder lösungsmittelfreien PUR-Klebstoff / Polyolefin-Film bzw. PET-Film / erste Klebstoffschicht aus einem lösungsmittelbasierten oder lösungsmittelfreien PUR-Klebstoff / Aluminiumfolie / zweite Klebstoffschicht aus einem Elektronenstrahl härtenden Klebstoff / Polyolefin-Film.

Bevorzugte Polyolefin-Filme sind siegelfähige Filme aus Polyethylen (PE) oder Polypropylen (PP). Für sterilisierfähige oder kochfeste Anwendungen ist PP wegen seiner höheren thermischen Belastbarkeit zu bevorzugen.

Der PET-Film kann eine Bedruckung aufweisen. Die Bedruckung wird bevorzugt auf der mit Klebstoff beschichteten Seite als Konterdruck ausgeführt.

Bevorzugt ist der Elektronenstrahl härtende Klebstoff ein Klebstoff auf Acrylatbasis.

Der Klebstoff auf Acrylatbasis kann Monomere, Oligomere oder Mischungen von Monomeren und Oligomeren als Basiseinheiten enthalten. Beispiele von Monomeren sind mono-, di und multifunktionale Acrylate, wie Phosphorsäureesteracrylate, Hydroxyacrylate, Carboxyacrylate, Aminoacrylate, Acrylsäure und Acrylamid. Beispiele von Oligomeren sind Epoxyacrylate, Urethanacrylate, Polyesteracrylate, Siliconacrylate und Silanacrylate. Die erwähnten Monomeren und Oligomeren sind entweder im Handel erhältlich oder können mit Routineverfahren hergestellt werden. Der hier verwendete Begriff "Acrylat" (oder "Acryl") umfasst auch "Methacrylat" (oder "Methacryl"), wobei die Acrylate bevorzugt sind.

Das erfindungsgemäss hergestellte Laminat eignet sich in besonderem Mass für die Fertigung von Standbeuteln, insbesondere für Getränke. Bevorzugt ist wenigstens der die Beutelaussenseite bildende Film des Laminates über eine Klebstoffschicht aus einem Elektronenstrahl härtenden Klebstoff laminiert.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- Fig. 1 den Querschnitt durch eine laminierte Verpackungsfolie;
- Fig. 2 die Herstellung einer vorlaminierten Teilfolie der Verpackungsfolie von Fig. 1;
- Fig. 3 die Herstellung der Verpackungsfolie von Fig. 1 aus der vorlaminierten Teilfolie von Fig. 2;
- Fig. 4 die Herstellung der Verpackungsfolie von Fig. 1 durch dreifache Laminierung.

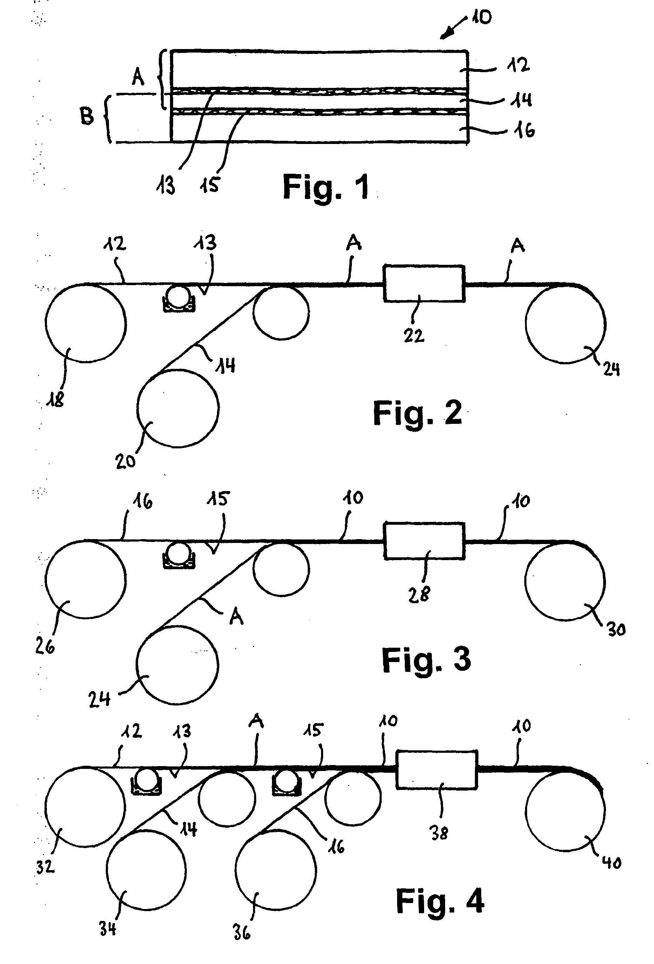

Eine in Fig. 1 gezeigte Verpackungsfolie 10 zur Herstellung von Standbeuteln für Getränke weist einen bedruckten PET-Film 12 als Aussenseite, eine Aluminiumfolie 14 als Barriereschicht und einen siegelfähigen PE- oder PP-Film 16 als Innenseite auf. Der PET-Film 12 ist mit der Aluminiumfolie 14 über eine erste Klebstoffschicht 13 und die Aluminiumfolie 14 mit dem Siegelfilm 16 über eine zweite Klebstoffschicht 15 permanent verbunden. Bei einer typischen Verpackungsfolie 10 beträgt die Dicke des PET-Films beispielsweise 12 µm, die Dicke der Aluminiumfolie 8-10 µm und die Dicke der Siegelschicht 90-100 µm.

Fig. 2 zeigt die Herstellung einer Teilfolie A bestehend aus PET-Film 12, Klebstoffschicht 13 und Aluminiumfolie 14. Der bedruckte PET-Film 12 wird als Band von einer ersten Wickelrolle 18 abgewickelt und kontinuierlich mit Klebstoff 13 beschichtet. Von einer zweiten Wickelrolle 20 wird die Aluminiumfolie 14 als Band an den mit Klebstoff 13 beschichteten PET-Film 12 herangeführt und mit diesem kontinuierlich zur Teilfolie A laminiert. Die Teilfolie A durchläuft eine Bestrahlungsstation 22, in welcher die Klebstoffschicht 13 in einem Bruchteil einer Sekunde durch Elektronenstrahlhärtung aushärtet. Nach dem Austritt aus der Bestrahlungsstation 22 wird die Teilfolie A auf eine dritte Wickelrolle 24 aufgewickelt.

In einem weiteren, in Fig. 3 gezeigten Schritt wird der Siegelfilm 16 von einer vierten Wickelrolle 26 abgewickelt und kontinuierlich mit Klebstoff 15 beschichtet. Von der dritten Wickelrolle 24 wird die Teilfolie A als Band an den mit Klebstoff 15 beschichteten Siegelfilm 16 herangeführt und mit diesem kontinuierlich zur Verpackungsfolie 10 laminiert. Die Verpackungsfolie 10 durchläuft eine Bestrahlungsstation 28 in welcher die Klebstoffschicht 15 in einem Bruchteil einer Sekunde durch Elektronenstrahlhärtung aushärtet. Nach dem Austritt aus der Bestrahlungsstation 28 wird die Verpackungsfolie 10 auf eine fünfte Wickelrolle 30 aufgewickelt.

Die zweite Klebstoffschicht 15 muss nicht zwingend aus einem Elektronenstrahl härtenden Klebstoff aufgebaut sein, sondern kann beispielsweise aus einem konventionellen PUR-Klebstoff bestehen. In diesem Fall entfällt natürlich die Bestrahlungsstation 28. Die längere Aushärtezeit des PUR-Klebstoffes hat keinen Einfluss auf das Herstellungsverfahren der Verbundfolie 10 und bedingt nur die Einhaltung einer Mindestlagerdauer bis zur Weiterverarbeitung.

Bei einer in der Zeichnung nicht dargestellten Herstellungsvariante wird zunächst eine Teilfolie B bestehend aus Siegelfilm 16, Klebstoffschicht 15 und Aluminiumfolie 14 hergestellt. Der Siegelfilm 16 wird als Band von einer ersten Wickelrolle abgewickelt und kontinuierlich mit Klebstoff 15 beschichtet. Von einer zweiten Wickelrolle wird die Aluminiumfolie 14 als Band an den mit Klebstoff 15 beschichteten Siegelfilm 16 herangeführt und mit diesem kontinuierlich zur Teilfolie B laminiert. Die Teilfolie B durchläuft eine Bestrahlungsstation, in welcher die Klebstoffschicht 15 in einem Bruchteil einer Sekunde durch Elektronenstrahlhärtung aushärtet. Nach dem Austritt aus der Bestrahlungsstation wird die Teilfolie auf eine dritte Wickelrolle aufgewickelt.

In einem weiteren Schritt wird der bedruckte PET-Film 12 von einer vierten Wickelrolle abgewickelt und kontinuierlich mit Klebstoff 13 beschichtet. Von der dritten Wickelrolle wird die Teilfolie B als Band an den mit Klebstoff 13 beschichteten PET-Film 12 herangeführt und mit diesem kontinuierlich zur Verpackungsfolie 10 laminiert. Die Verpackungsfolie 10 durchläuft eine Bestrahlungsstation, in welcher die Klebstoffschicht 13 in einem Bruchteil einer Sekunde durch Elektronenstrahlhärtung aushärtet. Nach dem Austritt aus der Bestrahlungsstation wird die Verpackungsfolie 10 auf eine fünfte Wickelrolle aufgewickelt.

Die erste Klebstoffschicht 13 muss nicht zwingend aus einem Elektronenstrahl härtenden Klebstoff aufgebaut sein, sondern kann beispielsweise aus einem konventionellen PUR-Klebstoff bestehen. In diesem Fall entfällt natürlich die Bestrahlungsstation. Die längere Aushärtezeit des PUR-Klebstoffes hat keinen Einfluss auf das Herstellungsverfahren der Verbundfolie 10 und bedingt nur die Einhaltung einer Mindestlagerdauer bis zur Weiterverarbeitung.

Bei der in Fig. 4 gezeigten Dreifachlaminierung erfolgt die Fertigung der Verpackungsfolie 10 durch Zusammenführen des PET-Films 12, der Aluminiumfolie 14 und des Siegelfilms 16 und das Verkleben über die beiden Klebstoffschichten 13, 15 in einem einzigen Durchlauf. Der bedruckte PET-Film 12 wird als Band von einer ersten Wickelrolle 32 abgewickelt und kontinuierlich mit Klebstoff 13 beschichtet. Von einer zweiten Wickelrolle 34 wird die Aluminiumfolie 14 als Band an den mit Klebstoff 13 beschichteten PET-Film 12 herangeführt und mit diesem kontinuierlich zur Teilfolie A laminiert. Der Siegelfilm 16 wird von einer dritten Wickelrolle 36 abgewickelt, kontinuierlich mit Klebstoff 15 beschichtet, als Band an die Teilfolie A herangeführt und mit dieser kontinuierlich zur Verpackungsfolie 10 laminiert. Die Verpackungsfolie 10 durchläuft eine Bestrahlungsstation 38 mit ausreichend hoher Leistung, so dass beide Klebstoffschichten 13, 15 in einem Bruchteil einer Sekunde in einem einzigen Durchlauf durch Elektronenstrahlhärtung aushärten. Nach dem Austritt aus der Bestrahlungsstation 38 wird die Verpackungsfolie 10 auf eine vierte Wickelrolle 40 aufgewickelt.

Die Verpackungsfolie 10 mit den vollständig ausgehärteten Klebstoffschichten 13, 15 kann unmittelbar nach dem Aufwickeln auf die Wickelrolle 40 auf einer Schneidvorrichtung in versandfertige Einheiten handelsüblicher Breite unterteilt werden.

Es versteht sich von selbst, dass bei der Verklebung der Filme oder Folien in den vorstehend beschriebenen Laminierverfahren der ,Klebstoff auch auf die jeweils anderen als die in den Beispielen gewählten Filme oder Folien aufgetragen werden kann.

## Patentansprüche

1. Verfahren zur Herstellung eines Verpackungsmaterials mit drei über zwei Klebstoffschichten (13,15) zu einem mehrschichtigen Laminat (10) verbundenen Filmen (12,16) oder Folien (14), wobei die Klebstoffschichten ausgehärtet werden und wenigstens eine Klebstoffschicht (13) aus einem Elektronenstrahl härtenden Klebstoff besteht und das Laminat (10) zum Aushärten des Klebstoffes mit Elektronen bestrahlt wird,
**dadurch gekennzeichnet, dass**
das Laminat (10) die folgende Struktur aufweist: PET-Film (12) / erste Klebstoffschicht (13) / Aluminiumfolie (14) / zweite Klebstoffschicht (15) / Polyolefin-Film (16).

2. Verfahren nach Anspruch 1, **dadurch gekennzeichnet, dass** die erste Klebstoffschicht (13) aus einem Elektronenstrahl härtenden Klebstoff und die zweite Klebstoffschicht (15) aus einem nicht Elektronenstrahl härtenden Klebstoff besteht.

3. Verfahren nach Anspruch 1, **dadurch gekennzeichnet, dass** die erste Klebstoffschicht (13) aus einem nicht Elektronenstrahl härtenden Klebstoff und die zweite Klebstoffschicht (15) aus einem Elektronenstrahl härtenden Klebstoff besteht.

4. Verfahren nach Anspruch 1, **dadurch gekennzeichnet, dass** beide Klebstoffschichten (13,15) aus einem Elektronenstrahl härtenden Klebstoff bestehen.

5. Verfahren nach Anspruch 2 oder 3, **dadurch gekennzeichnet, dass** die aus einem nicht Elektronenstrahl härtenden Klebstoff bestehende Klebstoffschicht (13, 15) aus einem lösungsmittelbasierten oder lösungsmittelfreien PUR-Klebstoff besteht.

6. Verfahren nach Anspruch 4, **dadurch gekennzeichnet, dass** das Laminat (10) die folgende Struktur aufweist: PET-Film (12) / erste Klebstoffschicht (13) aus einem Elektronenstrahl härtenden Klebstoff / Aluminiumfolie (14) / zweite Klebstoffschicht (15) aus einem Elektronenstrahl härtenden Klebstoff / Polyolefin-Film (16).

7. Verfahren nach Anspruch 5, **dadurch gekennzeichnet, dass** das Laminat (10) die folgende Struktur aufweist: PET-Film (12) / erste Klebstoffschicht aus einem Elektronenstrahl härtenden Klebstoff (13) / Aluminiumfolie (14) / zweite Klebstoffschicht (15) aus einem lösungsmittelbasierten oder lösungsmittelfreien PUR-Klebstoff / Polyolefin-Film (16).

8. Verfahren nach Anspruch 5, **dadurch gekennzeichnet, dass** das Laminat (10) die folgende Struktur aufweist: PET-Film (12) / erste Klebstoffschicht aus einem lösungsmittelbasierten oder lösungsmittelfreien PUR-Klebstoff (13) / Aluminiumfolie (14) / zweite Klebstoffschicht aus einem Elektronenstrahl härtenden Klebstoff (15) / Polyolefin-Film (16).

9. Verfahren nach einem der Ansprüche 1 bis 8, **dadurch gekennzeichnet, dass** der PET-Film (12) auf der mit Klebstoff beschichteten Seite eine Bedruckung aufweist.

10. Verfahren nach einem der Ansprüche 1 bis 9, **dadurch gekennzeichnet, dass** der Polyolefin-Film ein PE- oder PP-Film ist.

11. Verfahren nach einem der Ansprüche 1 bis 10, **dadurch gekennzeichnet, dass** der Elektronenstrahl härtende Klebstoff ein Klebstoff auf Acrylatbasis ist.

12. Standbeutel aus einem Laminat (10) hergestellt mit dem Verfahren nach einem der Ansprüche 1 bis 11.

13. Standbeutel aus einem Laminat (10) hergestellt mit dem Verfahren nach einem der Ansprüche 1 bis 11, **dadurch gekennzeichnet, dass** wenigstens der die Beutelaussenseite bildende Film (12) des Laminates (10) über eine Klebstoffschicht (13) aus einem Elektronenstrahl härtenden Klebstoff laminiert ist.

14. Standbeutel nach Anspruch 12 oder 13, **dadurch gekennzeichnet, dass** der Elektronenstrahl härtende Klebstoff ein Klebstoff auf Acrylatbasis ist.

## Claims

1. Process for producing a packaging material having three films (12, 16) or foils (14) joined via two adhesive layers (13, 15) to form a multi-layer laminate (10), wherein the adhesive layers are cured and at least one adhesive layer (13) consists of an electron beam-curing adhesive and the laminate (10) is irradiated to cure the adhesive using electrons, **characterised in that** the laminate (10) has the following structure: PET film (12)/first adhesive layer (13)/aluminium foil (14)/second adhesive layer (15)/polyolefin film (16).

2. Process according to claim 1, **characterised in that** the first adhesive layer (13) consists of an electron beam-curing adhesive and the second adhesive layer (15) consists of a non-electron beam-curing adhesive.

3. Process according to claim 1, **characterised in that** the first adhesive layer (13) consists of a non-electron beam-curing adhesive and the second adhesive layer (15) consists of an electron beam-curing adhesive.

4. Process according to claim 1, **characterised in that** both adhesive layers (13, 15) consist of an electron beam-curing adhesive.

5. Process according to claim 2 or 3, **characterised in that** the adhesive layer (13, 15) consisting of a non-electron beam-curing adhesive consists of a solvent-based or solvent-free PUR adhesive.

6. Process according to claim 4, **characterised in that** the laminate (10) has the following structure: PET film (12)/first adhesive layer (13) made from an electron beam-curing adhesive/aluminium foil (14)/second adhesive layer (15) made from an electron beam-curing adhesive/polyolefin film (16).

7. Process according to claim 5, **characterised in that** the laminate (10) has the following structure: PET film (12)/first adhesive layer made from an electron beam-curing adhesive (13)/aluminium foil (14)/second adhesive layer (15) made from a solvent-based or solvent-free PUR adhesive/polyolefin film (16).

8. Process according to claim 5, **characterised in that** the laminate (10) has the following structure: PET film (12)/first adhesive layer made from a solvent-based or solvent-free PUR adhesive (13)/aluminium foil (14)/second adhesive layer made from an electron beam-curing adhesive (15) /polyolefin film (16).

9. Process according to one of claims 1 to 8, **characterised in that** the PET film (12) has printing on the side coated with adhesive.

10. Process according to one of claims 1 to 9, **characterised in that** the polyolefin film is a PE or PP film.

11. Process according to one of claims 1 to 10, **characterised in that** the electron beam-curing adhesive is an adhesive based on acrylate.

12. Upright pouch made from a laminate (10) produced by the process according to one of claims 1 to 11.

13. Upright pouch made from a laminate (10) produced by the process according to one of claims 1 to 11, **characterised in that** at least the film (12) of the laminate (10) forming the outer side of the pouch is laminated via an adhesive layer (13) made from an electron beam-curing adhesive.

14. Upright pouch according to claim 12 or 13, **characterised in that** the electron beam-curing adhesive is an adhesive based on acrylate.

## Revendications

1. Procédé de fabrication d'un matériau d'emballage comprenant trois films (12, 16) ou feuilles (14) relié(e)s par deux couches de colle (13, 15) pour former un stratifié multicouches (10), dans lequel les couches de colle sont durcies et au moins une couche de colle (13) est une colle qui durcit sous un faisceau d'électrons et le stratifié (10) est exposé à un faisceau d'électrons pour faire durcir la colle,
**caractérisé en ce que**
le stratifié (10) présente la structure suivante : film en PET (12)/première couche de colle (13)/feuille d'aluminium (14)/seconde couche de colle (15)/film en polyoléfine (16).

2. Procédé selon la revendication 1, **caractérisé en ce que** la première couche de colle (13) est une colle qui durcit sous un faisceau d'électrons et la seconde couche de colle (15) et une colle qui ne durcit pas sous un faisceau d'électrons.

3. Procédé selon la revendication 1, **caractérisé en ce que** la première couche de colle (13) est une colle qui ne durcit pas sous un faisceau d'électrons, et la seconde couche de colle (15) est une colle qui durcit sous un faisceau d'électrons.

4. Procédé selon la revendication 1, **caractérisé en ce que** les deux couches de colle (13, 15) sont des colles qui durcissent sous un faisceau d'électrons.

5. Procédé selon la revendication 2 ou 3, **caractérisé en ce que** la couche de colle (13, 15) qui est une colle qui ne durcit pas sous un faisceau d'électrons est constituée par une colle à base de polyuréthane à base de solvants ou dépourvue de solvants.

6. Procédé selon la revendication 4, **caractérisé en ce que** le stratifié (10) présente la structure suivante : film en PET (12)/première couche de colle (13) en colle qui durcit sous un faisceau d'électrons/feuille d'aluminium (14)/seconde couche de colle (15) en colle qui durcit sous un faisceau d'électrons/film en polyoléfine (16).

7. Procédé selon la revendication 5, **caractérisé en ce que** le stratifié (10) présente la structure suivante : film en PET (12)/première couche de colle (13) en colle qui durcit sous un faisceau d'électrons/feuille d'aluminium (14)/seconde couche de colle (15) en colle à base de polyuréthane à base de solvants ou dépourvue de solvants/film en polyoléfine (16).

8. Procédé selon la revendication 5, **caractérisé en ce que** le stratifié (10) présente la structure suivante : film en PET (12)/première couche de colle (13) en colle à base de polyuréthane à base de solvants ou dépourvue de solvants/feuille d'aluminium (14)/seconde couche de colle (15) en colle qui durcit sous un faisceau d'électrons/film en polyoléfine (16).

9. Procédé selon l'une des revendications 1 à 8, **caractérisé en ce que** le film en PET (12) comporte une impression sur le côté revêtu de colle.

10. Procédé selon l'une des revendications 1 à 9, **caractérisé en ce que** le film en polyoléfine et un film en PE ou un film en PP.

11. Procédé selon l'une des revendications 1 à 10, **caractérisé en ce que** la colle qui durcit sous un faisceau d'électrons est une colle à base acrylique.

12. Poche capable de tenir debout réalisée en un stratifié (10) fabriqué avec le procédé selon l'une des revendications 1 à 11.

13. Poche capable de tenir debout réaliser en un stratifié (10) fabriqué avec le procédé selon l'une des revendications 1 à 11, **caractérisé en ce que** au moins le film (12) du stratifié (10) qui constitue la face extérieure de la poche est stratifié via une couche de colle (13) en colle qui durcit sous un faisceau d'électrons.

14. Poche capable de tenir debout selon la revendication 12 ou 13, **caractérisé en ce que** la colle qui durcit sous un faisceau d'électrons est une colle à base acrylique.
